(19)

Europäisches Patentamt
European Patent Office
Office européen des brevets

(11) **EP 2 317 140 A1**

(12) **EUROPÄISCHE PATENTANMELDUNG**

(43) Veröffentlichungstag:
**04.05.2011 Patentblatt 2011/18**

(51) Int Cl.:
*F03G 6/00* (2006.01)     *F03G 6/06* (2006.01)

(21) Anmeldenummer: **09013544.3**

(22) Anmeldetag: **27.10.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Siemens Aktiengesellschaft**
**80333 München (DE)**

(72) Erfinder:
- **Birnbaum, Jürgen**
  **90419 Nürnberg (DE)**
- **Gottfried, Peter**
  **91054 Erlangen (DE)**
- **Preitl, Zsuzsa, Dr.**
  **91052 Erlangen (DE)**
- **Thomas, Frank**
  **91056 Erlangen (DE)**

(54) **Verfahren und Steuerungssystem zum Betrieb eines solarthermischen Kraftwerks sowie solarthermisches Kraftwerk**

(57) Beschrieben wird ein Verfahren zum Betrieb eines solarthermischen Kraftwerks (1), welches eine Dampfturbine (11) und zumindest eine Sonnenkollektor-Dampfüberhitzereinheit (6a, 6b, 6c) aufweist, die die Dampfturbine (11) im Betrieb mit überhitztem Dampf speist, wobei die Temperatur des erzeugten überhitzten Dampfes unter Messung einer aktuellen Ist-Temperatur (TEa, TEb) des Dampfes auf eine Soll-Temperatur (TSa, TSb) geregelt wird. Dabei wird auf Basis einer Veränderung einer aktuellen Sonneneinstrahlung auf die Sonnenkollektor-Dampfüberhitzereinheit (6a, 6b, 6c) ein Einstrahlungs-Korrekturwert (EK) ermittelt, welcher als ein Parameter für die Temperaturregelung des überhitzten Dampfs in der Sonnenkollektor-Dampfüberhitzereinheit (6a, 6b, 6c) genutzt wird. Darüber hinaus werden ein Steuerungssystem (20, 20') für ein solarthermisches Kraftwerk (1), mit dem dieses Verfahren durchführbar ist, sowie ein solarthermischen Kraftwerk (1) mit einem solchen Steuerungssystem (20, 20') beschrieben.

FIG 2

EP 2 317 140 A1

**Beschreibung**

Die Erfindung betrifft ein Verfahren zum Betrieb eines solarthermischen Kraftwerks, welches eine Dampfturbine und zumindest eine Sonnenkollektor-Dampfüberhitzereinheit aufweist, die die Dampfturbine im Betrieb mit überhitztem Dampf speist, wobei die Temperatur des erzeugten überhitzten Dampfes unter Messung einer aktuellen Ist-Temperatur des Dampfes auf eine Soll-Temperatur geregelt wird. Darüber hinaus betrifft die Erfindung ein Steuerungssystem für ein solarthermisches Kraftwerk, das mit einem solchen Verfahren arbeiten kann, sowie ein solarthermisches Kraftwerk mit einem derartigen Steuerungssystem.

Solarthermische Kraftwerke stellen eine Alternative zur herkömmlichen Stromerzeugung dar. Derzeitig werden solarthermische Kraftwerke mit Parabolrinnenkollektoren mit einer indirekten Verdampfung mittels eines zusätzlichen Ölkreislaufs ausgeführt. Für die Zukunft werden solarthermische Kraftwerke mit direkter Verdampfung entwickelt. Ein solarthermisches Kraftwerk mit direkter Verdampfung kann beispielsweise aus einem oder mehreren Solarfeldern mit jeweils mehreren Parabolrinnenkollektoren und/oder Fresnel-Kollektoren bestehen, in denen das hineingepumpte Speisewasser zunächst vorgewärmt und verdampft wird und schließlich der Dampf überhitzt wird. Der überhitzte Dampf wird an einen konventionellen Kraftwerksteil geleitet, in dem die thermische Energie des Wasserdampfs in elektrische Energie umgewandelt wird. Vorzugsweise erfolgt dabei zunächst eine Vorwärmung und Verdampfung des Wassers in ersten Solarfeldern mit mehreren parallelen Strängen von Parabolrinnenkollektoren und/oder Fresnel-Kollektoren (im Folgenden auch "Verdampfer-Solarfelder" genannt). Der Dampf wird danach erst in einen Dampfabscheider geleitet, um das verbliebene Kondenswasser abzuscheiden. Anschließend wird der Dampf weiter in eine oder mehrere Sonnenkollektor-Dampfüberhitzereinheiten geleitet, um den Dampf zu überhitzen. Bei den Sonnenkollektor-Dampfüberhitzereinheiten kann es sich um einzelne Sonnenkollektoren, um mehrere untereinander verbundene Sonnenkollektorstränge oder um wiederum aus mehreren Sonnenkollektorsträngen bestehende Solarfelder handeln. Im Kraftwerksteil wird der überhitzte Dampf einer Turbine zugeführt, welche einen Generator antreibt. Werden mehrere Sonnenkollektor-Dampfüberhitzereinheiten verwendet, so wird der Dampf aus den Sonnenkollektor-Dampfüberhitzereinheiten vor dem Eintritt in die Turbine gemischt.

Beim nachfolgenden Abkühlen in einem Kondensator wandelt sich der Dampf wieder in Wasser um, welches in einem Speisewasserbehälter gesammelt und über die Speisewasserpumpe den Solarfeldern zugeführt wird. Zur effizienteren Nutzung der Energie kann der Kraftwerksteil nicht nur eine Turbine aufweisen, sondern mehrere bezüglich der Dampftransportrichtung hintereinander geschaltete Turbinen, beispielsweise eine Hochdruckturbine, in die zunächst der Frischdampf geleitet wird, und eine Mitteldruck- oder Niederdruckturbine, in der der von der Hochdruckturbine kommende Dampf noch einmal genutzt wird.

Dem Betrieb einer Turbine sind in der Regel enge Temperaturgrenzen gesetzt, um bei einem möglichst hohen Wirkungsgrad eine möglichst lange Lebensdauer zu erreichen. Sinkt die Dampftemperatur zu stark ab, verringert sich der Wirkungsgrad. Eine zu hohe Temperatur kann dagegen zu Beschädigungen der Turbine führen und deren Lebensdauer verkürzen. Ein typischer Temperaturbereich liegt zwischen 390 und 400°C, wobei der Dampfdruck zwischen 41 und 110 bar liegen kann. Diese Parameter können aber von Anlage zu Anlage je nach Auslegung der Komponenten variieren. Dennoch bleibt immer die Problematik, dass die Temperatur des an die Turbine gelieferten Frischdampfs möglichst stabil zu halten ist und keinen großen Schwankungen unterliegen soll.

Daher ist es notwendig, eine geeignete Frischdampf-Temperaturregelung zu realisieren, welche in der Lage ist, sogar im instationären Betrieb, d. h. wenn die Leistung des Kraftwerks variiert, die Frischdampftemperatur auf einem konstanten Soll-Wert zu halten. Übliche Frischdampf-Temperaturregelungen in konventionellen Kraftwerken arbeiten mit Dampfkühleinrichtungen, die den zunächst über die gewünschte Frischdampftemperatur überhitzten Dampf auf die erforderliche Temperatur abkühlen. Typischerweise werden hierfür Einspritzkühler verwendet, welche genau definierte Mengen an Wasser in den überhitzten Dampf einspritzen und ihn damit abkühlen. Andere Dampfkühleinrichtungen mischen kälteren Dampf hinzu.

Ein spezielles Problem bei solarthermischen Kraftwerken besteht darin, dass eine Abhängigkeit von einer nicht zu beeinflussenden externen Energiequelle, nämlich der Sonne, besteht. Bekanntermaßen kann sich die Sonneneinstrahlung beispielsweise aufgrund von vorüber ziehenden Wolken sehr plötzlich und sehr stark ändern, was erheblichen Einfluss auf die Heizleistung der betreffenden Solarkollektoren hat. Um nicht noch mehr Heizleistung zu verschenken und beispielsweise bei einer plötzlichen Abschattung im Rahmen der Soll-Temperaturregelung trotzdem noch eine Zeitlang zu kühlen, weil die aktuelle Ist-Temperatur noch nicht die plötzliche Heizleistungsreduzierung widerspiegelt, sollte die Regelung möglichst schnell und direkt auf derartige Ereignisse reagieren können. In dem Artikel "Dynamics and control of parabolic trough collector loops with direct steam generation" von Markus Eck und Tobias Hirsch in Solar Energy 81 (2007), S. 268 bis 279, wird daher ein Vorschlag für einen Regelungsaufbau gemacht, bei dem die sogenannte direkte normale Bestrahlung gemessen und darauf basierend die in das durchlaufende Wasser bzw. den Dampf induzierte Wärme abgeschätzt wird. Auf Basis dieser Abschätzung wird die voraussichtliche Dampfproduktion errechnet und der so kalkulierte Wert zur Regelung verwendet. Eine solche Vorgehensweise ist jedoch davon abhängig, dass für die Abschätzung des Wärmeeintrags möglichst genaue Einstrahlwerte ermittelt werden, die den tatsächlich auf die jeweiligen Sonnenkollektoren fallenden absoluten Strahlungseintrag repräsentieren. Um Einstrahlwerte zu messen, die eine Strahlungsintensität (in W/m$^2$) innerhalb eines definierten Einstrahlwinkels wiedergeben, können beispielsweise Pyrheliometer verwendet werden, die die direkte Bestrahlungsstärke in Sonnenrichtung messen. Je nach Art der Auswertung können auch Pyranometer verwendet werden, die die globale Sonneneinstrahlung messen, d. h. die Strahlungsflussdichte der Sonne in einem Sichtfeld von 180°. Diese Messgeräte sind jedoch relativ aufwändig gebaut. Da solarthermische Kraftwerke mit einer Vielzahl von Kollektoren aufgebaut werden sollen, die jeweils mit einer oder mehreren solcher Einstrahlungsermittlungseinheiten versehen werden müssen, um die Abschattung der Kollektoren zu erfassen, kann dies außerordentlich kostenintensiv sein. Zudem ergibt sich ein Problem, wenn die bei der Messung berücksichtigten Einstrahlwinkel nicht identisch mit dem Akzeptanzwinkel der verwendeten Sonnenkollektoren sind. In diesem Fall kann es zu zusätzlichen Messungenauigkeiten kommen.

Es ist eine Aufgabe der vorliegenden Erfindung, ein Betriebsverfahren und ein Steuerungssystem für ein solarthermisches Kraftwerk zu schaffen, welche eine einfache und kostengünstigere Temperaturregelung des überhitzten Dampfs für die Dampfturbine unter Berücksichtigung der aktuellen Sonneneinstrahlung erlauben.

Diese Aufgabe wird zum einen durch ein Verfahren gemäß Patentanspruch 1 und zum anderen durch ein Steuerungssystem gemäß Patentanspruch 10 sowie ein solarthermisches Kraftwerk gemäß Patentanspruch 12 mit einem solchen Steuerungssystem gelöst.

Kernpunkt des erfindungsgemäßen Verfahrens ist, dass auf Basis einer Veränderung einer aktuellen Sonneneinstrahlung auf die Sonnenkollektor-Dampfüberhitzereinheit ein Einstrahlungs-Korrekturwert ermittelt wird, welcher als ein weiterer Parameter, neben anderen Parametern wie der Soll-Temperatur und der Ist-Temperatur, für die Temperaturregelung des überhitzten Dampfs in der Sonnenkollektor-Dampfüberhitzereinheit genutzt wird.

Zur Durchführung des Verfahrens können direkt an oder in bzw. auf der Sonnenkollektor-Dampfüberhitzereinheit kontinuierlich oder in zeitlichen Abständen Einstrahlwerte ermittelt werden, welche von der aktuellen Sonneneinstrahlung auf die Sonnenkollektor-Dampfüberhitzereinheit abhängen bzw. die aktuelle Sonneneinstrahlung repräsentieren. Da es aber nicht auf die absoluten Werte der aktuellen Sonneneinstrahlung, sondern nur auf deren Veränderung ankommt, können als Einstrahlungsermittlungseinheiten auch einfache Lichtsensoren wie z. B. Photodioden oder photovoltaische Solarzellen verwendet werden, deren Strom ausgewertet wird. Dies ermöglicht eine breite Erfassung der Sonnenstrahlung über sehr großen Solarfeldern in kostengünstiger Weise. Ein weiterer Vorteil der Nutzung nicht des gemessenen absoluten Werts selbst, sondern lediglich seiner Veränderung besteht auch darin, dass keine Kalibrationen der gemessenen Werte notwendig sind.

Anhand der Veränderung der damit gemessenen Einstrahlwerte kann eine Abschattung der Sonnenkollektor-Dampfüberhitzereinheit sofort erkannt und ein Fehlerkorrekturwert erzeugt werden, um die Temperaturregelung entsprechend zu beeinflussen. Insbesondere kann beispielsweise die Dampfkühleinrichtung direkt bei Erkennung einer starken Reduzierung der Einstrahlung so eingestellt werden, dass sie unmittelbar weniger kühlt. Es muss also nicht abgewartet werden, bis sich die Abschattung in der Ist-Temperatur, beispielsweise am Ausgang der Sonnenkollektor-Dampfüberhitzereinheit, bemerkbar macht, was dazu führen würde, dass unnötig die Temperatur noch weiter abgekühlt wird. Somit kann unmittelbar schon ein Teil der reduzierten Einstrahlungsleistung durch eine geringere Kühlungsleistung kompensiert werden, was insgesamt die Effizienz des gesamten Kraftwerks verbessert. Ebenso kann schneller reagiert werden, wenn eine Wolke wegzieht und sich schlagartig die Heizleistung wieder erhöht. In diesem Fall kann sofort die Kühlleistung erhöht und so sicher vermieden werden, dass durch eine schlagartige Steigerung der Heizleistung eine Überhitzung des Dampfes über eine Maximaltemperatur erfolgt, was ggf. zu Schädigungen innerhalb des Systems führen könnte. Der Einstrahlungs-Korrekturwert kann vorzugsweise auf Basis der ersten Ableitung der Funktion der Einstrahlwerte in Abhängigkeit von der Zeit ermittelt werden. Beispielsweise kann bei einer Strommessung an einer Photodiode oder einer Solarzelle einfach die Veränderung des Stroms detektiert werden bzw. das Stromausgangssignal einem üblichen Differenzier zugeführt werden, der seinerseits ein zur zeitlichen Stromänderung proportionales Ausgangssignal ausgibt, welches dann als Einstrahlungs-Korrekturwert selbst verwendet wird oder zur Ermittlung eines Einstrahlungs-Korrekturwerts herangezogen werden kann.

Der Vollständigkeit halber wird aber darauf hingewiesen, dass das erfindungsgemäße Verfahren zwar die - wie erwähnt bevorzugte - Verwendung von sehr kostengünstigen Sensoren wie beispielsweise der genannten Photodioden oder Solarzellen ermöglicht, dass es aber grundsätzlich nicht ausgeschlossen ist, dass zumindest an einigen Stellen auch mit Hilfe der genannten Pyrheliometer die direkte Bestrahlungsstärke in Sonnenrichtung oder mit Hilfe der genannten Pyranometer die messbare globale Sonneneinstrahlung korrekt gemessen wird und auch Kalibrierungen erfolgen, um z. B. neben der Nutzung der Messwertveränderungen in der erfindungsgemäßen Weise zusätzlich auch absolute Werte zu ermitteln und ggf. an anderer Stelle nutzen zu können.

Vorzugsweise wird bei der Ermittlung des Korrekturwerts berücksichtigt, ob die Veränderungen der Einstrahlwerte über der Zeit einen bestimmten Maximalwert überschreiten, d. h. es werden beispielsweise nur Veränderungen innerhalb des Korrekturwerts berücksichtigt, die sehr schnell erfolgen, wogegen langsame Veränderungen, auch wenn es sich hierbei um große Veränderungen handelt, innerhalb der normalen Regelung auf den Soll-Wert langsam kompensiert werden. Hierzu wird vorzugsweise der Differentialwert, d. h. der aktuelle Wert der ersten Ableitung der Einstrahlungswerte-Funktion über der Zeit, mit einem Grenzwert verglichen und es erfolgt z. B. unterhalb des Grenzwerts keine Korrektur. Prinzipiell ist es aber auch möglich, den Differentialwert selber als Einstrahlungskorrekturwert zu verwenden bzw. den Einstrahlungskorrekturwert proportional zu diesem Differentialwert zu wählen. Dies führt dazu, dass schnelle Veränderungen zu stärkeren Korrekturen führen und sehr langsame Änderungen der Einstrahlung zu kleinen Einstrahlungskorrekturwerten und daher allenfalls geringen Einwirkungen auf die Regelung führen.

Ein erfindungsgemäßes Steuerungssystem sollte folgende Komponenten aufweisen:

i) Zumindest eine erste Temperaturmessstelle zur Ermittlung der aktuellen Ist-Temperatur, d. h. entsprechender Temperaturwerte bzw. die Temperatur repräsentierender Messwerte, des von der Sonnenkollektor-Dampfüberhitzereinheit erzeugten überhitzten Dampfes.

ii) Zumindest eine der Sonnenkollektor-Dampfüberhitzereinheit zugeordnete Einstrahlungsermittlungseinheit zur Ermittlung von Einstrahlwerten für die Sonnenkollektor-Dampfüberhitzereinheit, welche jeweils eine aktuelle Sonneneinstrahlung auf die betreffende Sonnenkollektor-Dampfüberhitzereinheit repräsentieren.

iii) Eine Regelungsanordnung, welche ausgebildet ist, um für die Sonnenkollektor-Dampfüberhitzereinheiten die Temperatur des überhitzten Dampfes unter Nutzung des gemessenen aktuellen Ist-Temperaturwerts auf eine vorgegebene Soll-Temperatur zu regeln, wobei auf Basis einer Veränderung der aktuellen Sonneneinstrahlung ein Einstrahlungs-Korrekturwert ermittelt wird, welcher als ein Parameter für die Temperaturregelung des überhitzten Dampfes in der Sonnenkollektor-Dampfüberhitzereinheit genutzt wird.

Durch das Steuerungssystem, das Teil eines komplexeren, übergeordneten Leittechnik-Systems des solarthermischen Kraftwerks sein kann, ist also die Dampftemperaturen durch Vorgabe einer Soll-Temperatur steuerbar, welche in den Regelungsanordnungen des Steuerungssystems zur Regelung genutzt wird.

Ein erfindungsgemäßes solarthermisches Kraftwerk muss folgende Komponenten aufweisen:

i) Zumindest eine Dampfturbine.

ii) Eine Anzahl von Sonnenkollektor-Dampferzeugereinheiten zur Erzeugung von Dampf.

iii) Eine Anzahl von Sonnenkollektor-Dampfüberhitzereinheiten, um zumindest einen Teil des erzeugten Dampfs zu überhitzen und die Turbine im Betrieb mit dem überhitztem Dampf zu speisen.

iv) Ein Steuerungssystem, das in der zuvor beschriebenen erfindungsgemäßen Weise aufgebaut ist.

Die abhängigen Ansprüche sowie die nachfolgende Beschreibung enthalten besonders vorteilhafte Ausgestaltungen und Weiterbildungen der Erfindung, wobei explizit darauf hingewiesen wird, dass das erfindungsgemäße Steuerungssystem bzw. das erfindungsgemäße solarthermische Kraftwerk auch entsprechend den abhängigen Ansprüchen zum Betriebsverfahren weitergebildet sein können und umgekehrt.

Zur Dampftemperaturregelung innerhalb der Sonnenkollektor-Dampfüberhitzereinheiten gibt es grundsätzlich verschiedene Varianten. Vorzugsweise erfolgt die Einstellung der Temperatur mit Hilfe einer Dampfkühleinrichtung. Typischerweise werden hierfür die oben genannten Einspritzkühler verwendet, welche genau definierte Mengen an Wasser in den überhitzten Dampf einspritzen und damit abkühlen. Andere Dampfkühleinrichtungen können aber ebenso genutzt werden.

Bei einer bevorzugten Ausführungsform der Erfindung ist jeweils eine Dampfkühleinrichtung in den Sonnenkollektor-Dampfüberhitzereinheiten zwischen zwei hintereinander geschalteten Teileinheiten, beispielsweise zwischen einzelnen Abschnitten eines Sonnenkollektorstrangs, angeordnet. Das heißt, eine Sonnenkollektor-Dampfüberhitzereinheit weist zumindest einen "Vorüberhitzer" auf, und hinter diesem befindet sich im Dampfweg die Dampfkühleinrichtung, durch welche die Dampftemperatur an dieser Stelle reduziert werden kann. Anschließend gelangt der Dampf in einen "Endüberhitzer". Eine solche Zwischenkühlung bzw. Zwischeneinspritzung hat, insbesondere bei der erfindungsgemäßen Nutzung eines Einstrahlungskorrekturwerts in der Regelung zur Berücksichtigung von Änderungen der aktuellen Sonneneinstrahlung, den Vorteil, dass zu hohe Temperaturen im Endüberhitzer vermieden werden, die dort zu Schädigungen führen könnten. Hierzu befinden sich geeignete Einstrahlungsermittlungseinheiten besonders bevorzugt im Bereich des Endüberhitzers, um die Einstrahlung auf den Endüberhitzer in der erfindungsgemäßen Weise zu berücksichtigen. Es können aber auch alternativ oder zusätzlich entsprechende Einstrahlungsermittlungseinheiten im Bereich des Vorüberhitzers für das erfindungsgemäße Verfahren genutzt werden.

Bei einer bevorzugten Weiterbildung erfolgt die Temperaturregelung des Dampfes in einer Sonnenkollektor-Dampfüberhitzereinheit auf Basis einer aktuellen Endüberhitzer-Austrittstemperatur d.h. einer Endtemperatur, die am Ausgang der Sonnenkollektor-Dampfüberhitzereinheit ermittelt wird. Diese kann beispielsweise als Ist-Temperatur genutzt werden. Vorzugsweise wird bei der Temperaturregelung zusätzlich eine aktuelle Zwischentemperatur berücksichtigt, die in einem Abstand hinter der Dampfkühleinrichtung, d. h. in der Regel zwischen den Teileinheiten, beispielsweise vor dem Endüberhitzer, oder ggf. auch innerhalb einer Teileinheit, ermittelt wird. Hierzu weist das Steuerungssystem vorzugsweise eine Anzahl von den einzelnen Sonnenkollektor-Dampfüberhitzereinheiten zugeordneten Zwischentemperatur-Messstellen zur Ermittlung der aktuellen Zwischentemperaturen des Dampfs innerhalb der Sonnenkollektor-Dampfüberhitzereinheiten auf.

Zur Temperaturregelung des Dampfs auf Basis einer Endüberhitzer-Austrittstemperatur und einer Zwischentemperatur gibt es verschiedene Varianten.

Bei einer bevorzugten Variante wird auf Basis der aktuellen Endüberhitzer-Austrittstemperatur als Ist-Temperatur sowie einer vorgegebenen Soll-Temperatur eine Regeldifferenz oder Regelabweichung ermittelt. Auf Basis dieser Regeldifferenz oder Regelabweichung wird wiederum ein Steuerwert für die Dampfkühleinrichtung ermittelt. Auf Basis der aktuellen Zwischentemperatur erfolgt jedoch zuvor noch eine Korrektur der Regeldifferenz oder Regelabweichung hinsichtlich einer Zeitverzögerung einer Regelungswirkung. Dabei wird berücksichtigt, dass es eine bestimmte Zeit dauert, bis sich die Wirkung der Einstellungsänderung der Dampfkühleinrichtung im Ist-Wert, d. h. in der Endüberhitzer-Austrittstemperatur, überhaupt bemerkbar macht. Bei dieser Variante handelt es sich um eine Art "Zweikreis-Regelung", da zwei Regelungskreise mit zwei Ist-Temperaturen, nämlich der Zwischentemperatur und der Endtemperatur, jeweils in geschickter Weise auf einen Regler gegeben werden, der letztlich den Steuerwert für die Dampfkühleinrichtung vorgibt und beispielsweise das Ventil für den Einspritzkühler ansteuert. Die Zwischentemperatur wird hierbei also genutzt, um die Reaktion der Abkühlung und die dadurch erreichte Temperaturänderung sofort zu erfassen, bevor sie zu einer Änderung der Endtemperatur führt. Dieser Einfluss wird dann mit dem Zeitverhalten des Endüberhitzers wieder zurückgenommen und so die Regelung stabilisiert. Dabei kann vorzugsweise das Zeitverhalten des Endüberhitzers mit einer Zeitverzögerung höherer Ordnung nachgebildet werden.

Bei einer anderen bevorzugten Variante wird in einem ersten, schnellen Regelungskreis auf Basis der aktuellen Zwischentemperatur als eine Regelgröße, beispielsweise als erster Ist-Wert, ein Steuerwert für die Dampfkühleinrichtung ermittelt. Auf Basis der aktuellen Endüberhitzer-Austrittstemperatur als eine weitere Regelgröße (zweiter Ist-Wert) wird dabei in einem dem ersten Regelungskreis kaskadenartig übergeordneten zweiten, langsameren Regelungskreis eine Führungsgröße (d. h. ein Soll-Wert) für den ersten Regelungskreis ermittelt. Bei einer solchen "Kaskadenregelung" wird also in dem zweiten, langsameren Regelungskreis die aktuelle Endüberhitzer-Austrittstemperatur der Sonnenkollektor-Dampfüberhitzereinheit als Ist-Wert mit dem für die Sonnenkollektor-Dampfüberhitzereinheit vorgegebenen Soll-Wert verglichen. Dabei wird jedoch nicht direkt ein Steuerwert für die Dampfkühleinrichtung ermittelt, sondern der dadurch erzeugte Wert dient als Soll-Wert für die untergeordnete schnelle Regelung, die entsprechend dieser Führungsgröße in der Lage ist, die Dampfkühleinrichtung schnell nachzuregeln. Auf diese Weise kann auf Änderungen im System, beispielsweise eine Abschattung des Vorüberhitzers, relativ schnell reagiert werden, und dennoch ist die Gesamtregelung der Endtemperatur recht stabil.

Der erfindungsgemäß in der Regelung verwendete Einstrahlungs-Korrekturwert kann, insbesondere bei den vorgenannten Regelungsvarianten, dazu genutzt werden um eine Führungsgröße für einen Regelungskreis, insbesondere einen Regler-Baustein wie einen PI-Regler oder PID-Regler, zu korrigieren.

Besonders bevorzugt wird außerdem bei der Regelung ein vorgegebener Grenzwert so berücksichtigt, dass die Temperatur des Dampfes hinter der Dampfkühleinrichtung oberhalb der Sattdampftemperatur liegt. Wenn dafür gesorgt ist, dass auch hinter der Dampfkühleinrichtung immer die Sattdampftemperatur als Mindesttemperatur eingehalten wird, kann eine Kondensation sicher verhindert werden. Dies ist sinnvoll, da Kondenswasser den Kollektoren und den weiteren Komponenten schaden würde. Um diesen Grenzwert zu ermitteln, weist das Steuerungssystem bevorzugt eine Anzahl von Druck-Messstellen (d. h. mindestens eine Druck-Messstelle) auf, um den Druck in den Sonnenkollektor-Dampfüberhitzereinheiten zu messen. Auf Basis des Drucks kann dann die Sattdampftemperaturgrenze ermittelt und ein entsprechender Temperatur-Schwellenwert generiert werden.

Um für die Turbine große Dampfmengen zur Verfügung stellen zu können, kann das solarthermische Kraftwerk vorteilhafterweise mehrere, vorzugsweise parallel geschaltete, Sonnenkollektor-Dampfüberhitzereinheiten aufweisen, die die Dampfturbine im Betrieb mit überhitztem Dampf speisen, wobei der aus den Sonnenkollektor-Dampfüberhitzereinheiten kommende überhitzte Dampf vor dem Turbineneingang gemischt wird.

Dabei kann vorzugsweise jeweils für die einzelnen Sonnenkollektor-Dampfüberhitzereinheiten separat die Temperatur des erzeugten überhitzten Dampfes unter Messung einer aktuellen Ist-Temperatur auf eine Soll-Temperatur geregelt werden, um eine vorgegebene Soll-Mischtemperatur des gemischten Dampfes zu erreichen. Hierzu kann das Steuerungssystem entsprechend eine Mehrzahl von ersten Temperatur-Messstellen zur Ermittlung von aktuellen Ist-Temperaturen des von den einzelnen Sonnenkollektor-Dampfüberhitzereinheiten jeweils überhitzten Dampfes und eine Mehrzahl von den ersten Sonnenkollektor-Dampfüberhitzereinheiten zugeordneten Regelungsanordnungen, d. h. eine oder mehrere Regelungskreisläufe aufweisen, die in üblicher Weise mit geeigneten Regelkomponenten, beispielsweise Ventilen zur Ansteuerung der Dampfkühleinrichtungen, elektronischen Reglern zur Ansteuerung der Ventile, Differenzierern etc., aufgebaut sein können. Diese Regelungsanordnungen müssen so ausgebildet sein, dass sie für die einzelnen Sonnenkollektor-Dampfüberhitzereinheiten jeweils die Temperatur des erzeugten überhitzten Dampfes unter Nutzung des gemessenen aktuellen Ist-Temperaturwerts in der jeweiligen Sonnenkollektor-Dampfüberhitzereinheit auf eine vorgegebene Soll-Temperatur regeln.

Das Steuerungssystem weist in dieser bevorzugten Variante eine Anzahl von den einzelnen Sonnenkollektor-Dampfüberhitzereinheiten zugeordneten Einstrahlungsermittlungseinheiten auf, welche zur Ermittlung der genannten Einstrahlwerte dienen. Damit kann die erfindungsgemäße Ermittlung von EinstrahlungsKorrekturwerten auf Basis einer Veränderung einer aktuellen Sonneneinstrahlung auf die Sonnenkollektor-Dampfüberhitzereinheit und deren Berücksichtigung in der Temperaturregelung in jeder der Sonnenkollektor-Dampfüberhitzereinheiten bzw. in jeder der Regelungsanordnungen separat erfolgen. D. h. es weist jede der Regelungsanordnungen z. B. eine eigene Einstrahlungs-Korrektureinheit auf.

Wie eingangs erwähnt, besteht bei solarthermischen Kraftwerken ein Problem in der Abhängigkeit von einer nicht zu beeinflussenden externen Energiequelle. Zwar lässt sich durch eine weitere Dampfkühleinrichtung, die vorzugsweise hinter oder in einer Mischzone angeordnet ist, in der der aus den Sonnenkollektor-Dampfüberhitzereinheiten kommende überhitzte Dampf gemischt wird, eine Temperatur-Nachregelung des überhitzten Dampfes vor Eintritt in die Turbine erreichen und damit eine Überhitzung vermeiden. Diese "End-Dampfkühleinrichtung" kann auch vorzugsweise in einem eigenen Regelungskreis angesteuert werden, um mit der End-Dampfkühleinrichtung den Mischdampf exakt auf die gewünschte Temperatur einzustellen. Hierzu können weiterhin besonders bevorzugt die einzelnen Sonnenkollektor-Dampfüberhitzereinheiten auf eine Soll-Temperatur geregelt werden, die zu einer Soll-Mischtemperatur führt, die oberhalb der für die Turbine geeigneten Frischdampftemperatur liegt, um so eine Einstellung der Frischdampftemperatur durch die End-Dampfkühleinrichtung in beiden Richtungen, d. h. sowohl nach oben als auch nach unten zu ermöglichen.

Ebenso ließe sich eine Regelung der Dampferzeugung und der Dampfüberhitzung insofern realisieren, dass einer zu hohen Temperatur durch künstliche Abschattung oder Dejustage (d. h. Verschlechterung des Einstrahlwinkels) der betreffenden Sonnenkollektor-Dampfüberhitzereinheit begegnet wird.

Problematisch ist es jedoch, wenn durch eine zu starke Abschattung einzelne Sonnenkollektor-Dampfüberhitzereinheiten oder ganze Solarfelder nicht mehr in der Lage sind, die nötige Energie zu liefern, um selbst bei einer minimal aktiven oder deaktivierten Dampfkühleinrichtung auf die gewünschte Frischdampftemperatur zu kommen. Die für die Turbine erforderliche Frischdampftemperatur kann dann nicht mehr gehalten werden.

Bei einer ganz besonders bevorzugten Weiterbildung der Erfindung wird daher zumindest für eine erste Sonnenkollektor-Dampfüberhitzereinheit die aktuelle Soll-Temperaturregelung unter Berücksichtigung der aktuellen Ist-Temperatur zumindest einer zweiten Sonnenkollektor-Dampfüberhitzereinheit durchgeführt. D. h. bei einem derartigen Verfahren erfolgt also die Regelung nicht nur durch Vergleich der eigenen aktuellen Ist-Temperatur innerhalb der jeweiligen Sonnenkollektor-Dampfüberhitzereinheit mit der aktuellen Soll-Temperatur, sondern es wird auch die Ist-Temperatur der weiteren Sonnenkollektor-Dampfüberhitzereinheit berücksichtigt. Ist beispielsweise bei der zweiten Sonnenkollektor-Dampfüberhitzereinheit die aktuelle Ist-Temperatur zu gering und ist diese zweite Sonnenkollektor-Dampfüberhitzereinheit z. B. aufgrund einer Abschattung nicht mehr in der Lage, die vorgegebene Soll-Temperatur zu erreichen, so kann die erste Sonnenkollektor-Dampfüberhitzereinheit unterstützend wirken und mit einer höheren Soll-Temperatur gefahren werden. So kann erreicht werden, dass beim Mischen des Frischdampfs aus den verschiedenen Sonnenkollektor-Dampfüberhitzereinheiten die Minderleistung der zweiten Sonnenkollektor-Dampfüberhitzereinheit durch die höhere Temperatur des Dampfes aus der ersten Sonnenkollektor-Dampfüberhitzereinheit wieder ausgeglichen wird.

Die Durchführung der aktuellen Soll-Temperaturregelung unter Berücksichtigung der aktuellen Ist-Temperatur einer anderen Sonnenkollektor-Dampfüberhitzereinheit ist auf verschiedene Weise möglich. Prinzipiell kann beispielsweise, wenn eine zweite Sonnenkollektor-Dampfüberhitzereinheit die vorgegebene Soll-Temperatur nicht erreichen kann, ein in der ersten Sonnenkollektor-Dampfüberhitzereinheit aktuell gemessener Ist-Temperatur-Wert vor einem Vergleich mit der Soll-Temperatur der ersten Sonnenkollektor-Dampfüberhitzereinheit entsprechend reduziert werden, so dass die erste Sonnenkollektor-Dampfüberhitzereinheit automatisch mit einer höheren Dampftemperatur gefahren wird. Bei einer besonders bevorzugten Variante wird aber für die erste Sonnenkollektor-Dampfüberhitzereinheit eine aktuelle Soll-Temperatur unter Berücksichtigung der aktuellen Ist-Temperatur der zweiten Sonnenkollektor-Dampfüberhitzereinheit ermittelt. Das heißt, die Kompensation erfolgt durch eine Veränderung der Soll-Temperaturen für die Regelungsanordnungen der einzelnen Sonnenkollektor-Dampfüberhitzereinheiten, so dass innerhalb der Regelungsanordnungen selbst kein Eingriff nötig ist. Dies ermöglicht es insbesondere in vorteilhafter Weise, die Koordinierungsfunktion zu deaktivieren oder zu aktivieren, indem entweder eine ohne die Koordinierungsfunktion vorgesehene ideale Soll-Temperatur oder eine geeignet geänderte Soll-Temperatur vorgegeben wird.

Ein Steuerungssystem kann hierzu vorzugsweise eine Temperaturkoordinierungseinrichtung aufweisen, die dafür sorgt, dass im Betrieb zumindest für eine erste Sonnenkollektor-Dampfüberhitzereinheit eine Soll-Temperaturregelung unter Berücksichtigung der aktuellen Ist-Temperatur zumindest einer zweiten Sonnenkollektor-Dampfüberhitzereinheit durchgeführt wird.

Es ist klar, dass eine solche koordinierte Temperaturregelung insbesondere bei einer Anlage mit mehr als zwei Sonnenkollektor-Dampfüberhitzereinheiten anwendbar ist. Dabei werden entsprechend die Ist-Temperaturen aller Sonnenkollektor-Dampfüberhitzereinheiten registriert, und unter Berücksichtigung aller Ist-Temperaturen werden dann ggf. individuell die Soll-Temperaturen für die einzelnen Sonnenkollektor-Dampfüberhitzereinheiten vorgegeben. Hierbei ist es nicht notwendig, dass genau eine einzelne im vollen Betrieb laufende Sonnenkollektor-Dampfüberhitzereinheit die Minderleistung einer zweiten Sonnenkollektor-Dampfüberhitzereinheit vollständig ausgleicht, sondern es können beispielsweise die Soll-Temperaturen mehrerer nicht von der Abschattung betroffener Sonnenkollektor-Dampfüberhitzereinheiten geringfügig höher gesetzt werden, um gemeinsam die Minderleistung einer Sonnenkollektor-Dampfüberhitzereinheit zu kompensieren.

Bei einem Kraftwerk mit mehr als zwei Sonnenkollektor-Dampfüberhitzereinheiten ist die Temperaturkoordinierungseinrichtung dementsprechend derart ausgebildet, dass sie unter Berücksichtigung der aktuellen Ist-Temperaturen aller an die Temperaturkoordinierungseinrichtung angeschlossener Sonnenkollektor-Dampfüberhitzereinheiten die aktuellen Soll-Temperaturregelungen für die verschiedenen Sonnenkollektor-Dampfüberhitzereinheiten durchführt und dabei - wie dies zuvor beschrieben ist - beispielsweise durch Vorgaben individueller Soll-Temperaturen einen Ausgleich vornimmt, wenn eine oder mehrere der Sonnenkollektor-Dampfüberhitzereinheiten nicht in der Lage sind, die vorgegebenen Soll-Temperaturen zu erreichen.

Bei den Sonnenkollektor-Dampfüberhitzereinheiten kann es sich wie oben erwähnt um einzelne Sonnenkollektorstränge handeln, die wiederum mehrere hintereinander geschaltete einzelne Rinnenkollektoren aufweisen. Das heißt, es kann jeder Sonnenkollektorstrang für sich geregelt werden, und im Rahmen der erfindungsgemäßen Temperaturkoordinierung werden die Soll-Temperaturen der einzelnen Sonnenkollektorstränge eingestellt. Grundsätzlich kann es sich aber bei den Sonnenkollektor-Dampfüberhitzereinheiten auch um größere Solarfelder mit mehreren Sonnenkollektorsträngen handeln, und es wird auf dieser Ebene die Soll-Temperatur eines ganzen Solarfeldes zur Kompensation einer Minderleistung eines oder mehrerer anderer Solarfelder angepasst. Insbesondere ist es auch möglich, dass kaskadenartig sowohl in den einzelnen Sonnenkollektorsträngen, als einzelne Sonnenkollektor-Dampfüberhitzereinheiten innerhalb eines Solarfeldes, eine Dampfüberhitzung in der erfindungsgemäßen Weise geregelt wird und dass darüber hinaus auch eine Kompensation zwischen den verschiedenen Solarfeldern in der erfindungsgemäßen Weise realisiert wird.

Da es bei den zuvor beschriebenen Varianten darauf ankommt, dass der durch Mischung der von den einzelnen Sonnenkollektor-Dampfüberhitzereinheiten gelieferten überhitzten Dampfströme entstehende Mischdampf die richtige Soll-Mischtemperatur aufweist und sich diese Soll-Mischtemperatur durch die Dampfmengen ergibt, welche jeweils mit den unterschiedlichen Temperaturen zur Mischung beitragen, wird vorzugsweise die aktuelle Soll-Temperaturregelung der ersten Sonnenkollektor-Dampfüberhitzereinheit unter Berücksichtigung der Dampfmassenströme in der ersten und in der zweiten Sonnenkollektor-Dampfüberhitzereinheit durchgeführt. Das heißt, es wird beispielsweise auf Basis der Dampfmassenströme in den beiden Sonnenkollektor-Dampfüberhitzereinheiten sowie der zugehörigen Ist-Temperaturen eine voraussichtliche Ist-Mischtemperatur vorab bestimmt. Auf Basis der so bestimmten voraussichtlichen Ist-Mischtemperatur können dann beispielsweise die Soll-Werte für die beiden Sonnenkollektor-Dampfüberhitzereinheiten angepasst werden. Sind mehr als zwei Sonnenkollektor-Dampfüberhitzereinheiten zu koordinieren, so werden vorzugsweise die Dampfmassenströme aller von der Koordinierungseinrichtung kontrollierten Sonnenkollektor-Dampfüberhitzereinheiten ermittelt und bei der Soll-Temperaturregelung der jeweiligen Sonnenkollektor-Dampfüberhitzereinheiten berücksichtigt. Hierzu weist das erfindungsgemäße Steuerungssystem vorzugsweise eine Anzahl von den einzelnen Sonnenkollektor-Dampfüberhitzereinheiten zugeordneten Massenstrom-Messstellen zur Ermittlung von Dampfmassenströmen in den jeweiligen Sonnenkollektor-Dampfüberhitzereinheiten auf.

Die Erfindung wird im Folgenden anhand von Ausführungsbeispielen unter Hinweis auf die beigefügten Zeichnungen näher erläutert. Es zeigen:

Figur 1 eine stark vereinfachte schematische Übersicht eines Ausführungsbeispiels eines erfindungsgemäßen solarthermischen Kraftwerks,

Figur 2 eine schematische Darstellung eines Steuerungssystems für die Regelung von Sonnenkollektor-Dampfüberhitzereinheiten gemäß einem ersten Ausführungsbeispiel der Erfindung,

Figur 3 eine schematische Darstellung für die Regelung von Sonnenkollektor-Dampfüberhitzereinheiten gemäß einem zweiten Ausführungsbeispiel der Erfindung.

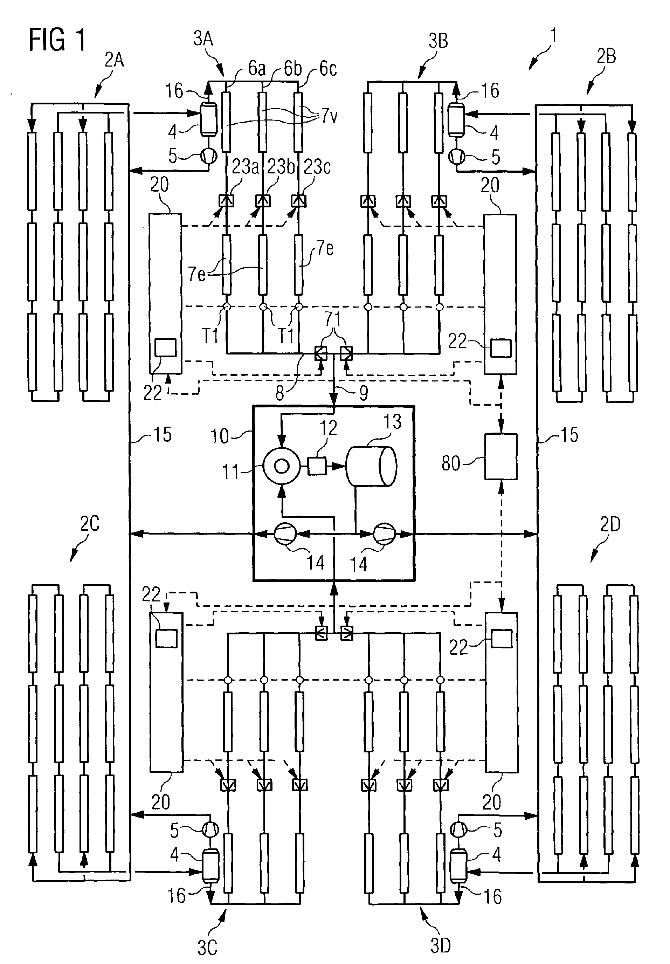

Das in Figur 1 stark vereinfacht dargestellte Solarkraftwerk weist insgesamt vier Verdampfer-Solarfelder 2A, 2B, 2C, 2D auf, welche jeweils aus mehreren parallel geschalteten Sonnenkollektorsträngen mit jeweils mehreren in Reihe hintereinander geschalteten einzelnen Sonnenkollektoren, beispielsweise Parabolrinnenkollektoren oder Fresnel-Kollektoren, aufgebaut sind. In dem dargestellten Ausführungsbeispiel sind der Einfachheit halber jeweils nur zwei Kollektorstränge mit je sechs einzelnen Kollektoren dargestellt. Über Speisewasserleitungen 15 werden diese Verdampfer-Solarfelder 2A, 2B, 2C, 2D jeweils mit Wasser gespeist, welches innerhalb der Verdampfer-Solarfelder 2A, 2B, 2C, 2D verdampft wird. Von den Verdampfer-Solarfeldern 2A, 2B, 2C, 2D geht der Dampf jeweils zunächst in einen Dampfabscheider 4, in dem Restwasser aus dem Heißdampf entfernt wird. Das Wasser aus dem Dampfabscheider 4 wird mittels den Verdampfer-Solarfeldern 2A, 2B, 2C, 2D jeweils zugeordneten Umwälzpumpen 5 in die Speisewasserleitungen 15 zurücktransportiert.

Der Heißdampf wird vom Dampfabscheider 4 über eine Dampfleitung 16 jeweils den den Verdampfer-Solarfeldern 2A, 2B, 2C, 2D zugeordneten Überhitzer-Solarfeldern 3A, 3B, 3C, 3D zugeführt. Diese sind wiederum aus mehreren Überhitzer-Sonnenkollektorsträngen 6a, 6b, 6c (im Folgenden nur kurz "Kollektorstränge" genannt) mit mehreren einzelnen Sonnenkollektoren aufgebaut. In Figur 1 sind der besseren Übersichtlichkeit wegen in den Überhitzer-Solarfeldern 3A, 3B, 3C, 3D jeweils nur drei parallele Sonnenkollektorstränge 6a, 6b, 6c mit jeweils zwei hintereinander angeordneten Dampfüberhitzer-Sonnenkollektoren 7v, 7e dargestellt. Auch hierbei kann es sich um Parabolrinnenkollektoren oder Fresnel-Kollektoren handeln. Hinter den Überhitzer-Solarfeldern 3A, 3B, 3C, 3D wird der Dampf zunächst gemischt und als Frischdampf in einem Powerblock 10 (der z.B. als konventioneller Teil, d.h. wie bei einem herkömmlichen fossilen Dampfkraftwerk, aufgebaut sein kann) einer Turbine 11 zugeführt. Diese Turbine 11 treibt in üblicher Weise einen Generator (nicht dargestellt) an. Der von der Turbine 11 genutzte Dampf wird dann einem Kondensator 12 mit einem Kühlturm (nicht dargestellt) zugeführt. Das Kondensat wird wieder einem Speisewasserbehälter 13 zugeleitet, aus dem die Speisewasserpumpen 14 das Wasser erneut den Speisewasserleitungen 15 zuführen, um so einen Kreislauf zu bilden.

Zusätzlich kann der Powerblock 10 so aufgebaut sein, dass der Dampf noch effektiver genutzt wird. Beispielsweise kann der Powerblock 10 eine Hochdruckturbine aufweisen, und am Ende dieser Hochdruckturbine wird dann der Dampf an eine Niederdruckturbine weitergeleitet, bevor er einer Kondensation zugeführt wird. Weiterhin können bestimmte Mengen des Dampfes auch genutzt werden, um Speisewasser vorzuwärmen. All diese Komponenten und Verfahrensmöglichkeiten sind dem Fachmann aber bekannt und werden daher der besseren Übersichtlichkeit wegen in diesem schematischen Diagramm in Figur 1 nicht dargestellt.

Wie bereits eingangs erwähnt, ist es zur Erreichung eines hohen Wirkungsgrades und einer langen Lebensdauer der Turbine wichtig, den zugeführten Frischdampf in engen Temperaturgrenzen zu halten. Aus diesem Grunde wird die Temperatur in den Dampfüberhitzer-Solarfeldern 3A, 3B, 3C, 3D üblicherweise auf einen Soll-Wert geregelt, was mit Hilfe von den jeweiligen Dampfüberhitzer-Solarfeldern 3A, 3B, 3C, 3D zugeordneten Steuerungssystemen 20 (hier grob schematisch als Funktionsblöcke neben den Dampfüberhitzer-Solarfeldern 3A, 3B, 3C, 3D dargestellt) erfolgt. Diese Steuerungssysteme 20 können Komponenten des Leittechnik-Systems des Kraftwerks sein und arbeiten in der Weise, dass eine Temperatur am Ausgang der Kollektorstränge 6a, 6b, 6c gemessen wird und darauf basierend dann eine Zwischenkühlung zwischen den einzelnen Kollektoren 7v, 7e der Kollektorstränge 6a, 6b, 6c mittels Einspritzkühlern 23a, 23b, 23c erfolgt. Optional kann auch eine weitere Abkühlung in einem End-Einspritzkühler 71 in oder nach einer Mischzone 8 vor dem Eingang 9 zur Turbine 11 erfolgen.

Die Steuerungssysteme 20 weisen jeweils eine Temperaturkoordinierungseinrichtung 22 auf, welche die Temperaturregelungen für die einzelnen Überhitzer-Kollektorstränge 6a, 6b, 6c jeweils koordiniert. Das heißt, in dem dargestellten Ausführungsbeispiel bilden die einzelnen Kollektorstränge 6a, 6b, 6c jeweils die einzelnen Sonnenkollektor-Dampfüberhitzereinheiten, welche jeweils über eigene Regelungsanordnungen verfügen, die die Sonnenkollektor-Dampfüberhitzereinheiten jeweils auf einen gewünschten Soll-Wert regeln, wobei aber die Temperaturkoordinierungseinrichtung 22 dafür sorgt, dass eine nicht im jeweiligen Kollektorstrang 6a, 6b, 6c selbst behebbare Leistungsschwäche durch die anderen Kollektorstränge 6a, 6b, 6c desselben Überhitzer-Solarfeldes 3A kompensiert wird.

In analoger Weise ist z. B. auch eine Koordinierung der Temperaturregelung der einzelnen Überhitzer-Solarfelder 3A, 3B, 3C, 3D mit Hilfe einer übergeordneten Temperaturkoordinierungseinrichtung 80 möglich, die z.B. Teil des Leittechnik-Systems sein kann, und die die einzelnen Steuersysteme 20 kontrolliert.

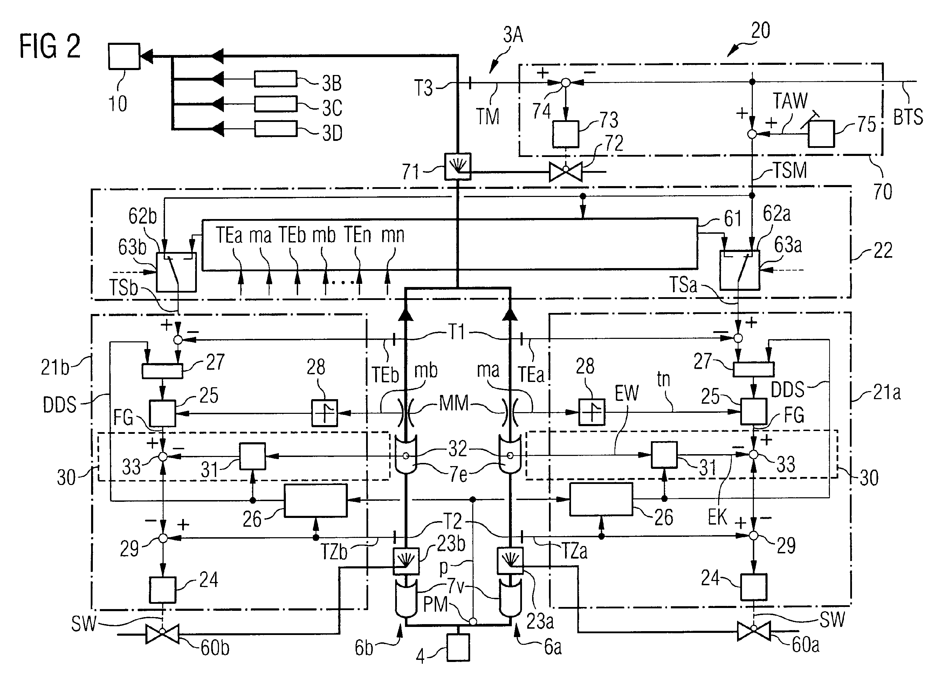

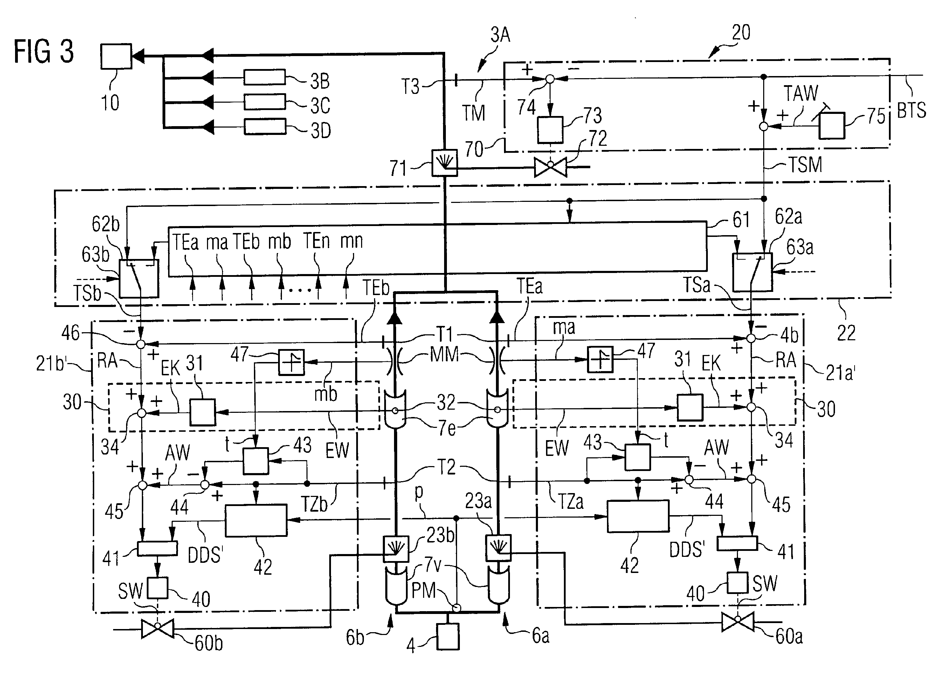

Die Figuren 2 und 3 zeigen jeweils verschiedene Ausführungsbeispiele für eine erfindungsgemäße Temperaturregelung, wobei hier der Einfachheit halber nur zwei parallele Kollektorstränge 6a, 6b dargestellt sind. Tatsächlich ist es so, dass in der Realität meist mehr als zwei Kollektorstränge parallel geschaltet sind, was in den Figuren 2 und 3 jeweils nur in der Temperaturkoordinierungs-Einrichtung 22 angedeutet ist, indem dort in einer Berechnungseinheit 61 auch Temperaturwerte TEn und Dampfmassenströme mn von weiteren Überhitzer-Sonnenkollektorsträngen berücksichtigt werden.

Sowohl bei dem Ausführungsbeispiel gemäß Figur 2 als auch bei dem Ausführungsbeispiel gemäß Figur 3 kommt jeweils der Dampf aus dem Dampfabscheider 4 und verteilt sich auf die beiden Kollektorstränge 6a, 6b, welche jeweils zwei hintereinander angeordnete Überhitzer-Sonnenkollektoren 7v, 7e aufweisen. Hinter dem ersten Überhitzer-Sonnenkollektor 7v, dem Vorüberhitzer 7v, befindet sich jeweils ein Einspritzkühler 23a, 23b, welcher über ein Ventil 60a, 60b von einer dem jeweiligen Kollektorstrang zugeordneten Regelungsanordnung 21a, 21b bzw. 21a', 21b' angesteuert wird. Vor dem Vorüberhitzer 7v befindet sich eine Druck-Messstelle PM, in der ein Druck p innerhalb des Kollektorsystems gemessen wird. Unmittelbar hinter den Einspritzkühlern 23a, 23b befindet sich eine Temperatur-Messstelle T2, um die Zwischentemperatur TZa, TZb des Dampfes zu messen. Hinter dem zweiten Überhitzer-Sonnenkollektor 7e, dem Endüberhitzer 7e, befindet sich jeweils eine Massenstrom-Messstelle MM, um den Dampfmassenstrom ma, mb in dem jeweiligen Kollektorstrang 6a, 6b zu ermitteln. Dahinter befindet sich jeweils eine Temperatur-Messstelle T1, um die Endtemperatur TEa, TEb in dem jeweiligen Kollektorstrang 6a, 6b zu messen.

Bei beiden Ausführungsbeispielen befindet sich im Bereich des Endüberhitzers 7e jeweils eine Einstrahlungsermittlungseinheit 32 mit einem oder mehreren geeigneten Sensoren, um einen Einstrahlwert zu ermitteln, welcher die aktuelle Sonneneinstrahlung auf den jeweiligen Sonnenkollektor repräsentiert. Dabei kann z. B. ermittelt werden, wie viel Watt an Sonneneinstrahlleistung pro $m^2$ aktuell in einem definierten Winkelbereich zur Verfügung stehen. Geeignete Messgeräte wurden bereits oben genannt. Es ist klar, dass entsprechende Einstrahlermittlungseinheiten auch im Bereich der anderen Sonnenkollektoren, beispielsweise am Vorüberhitzer 7v, angeordnet sein können und auch die dort ermittelten Werte alternativ oder ergänzend für die Regelung genutzt werden können. Wie später noch erläutert wird, kann mit Hilfe der so ermittelten Einstrahlwerte schneller auf sich plötzlich ergebende Veränderungen in der Einstrahlung, beispielsweise aufgrund von durchziehenden Wolken oder dergleichen, reagiert werden.

Wie bereits im Zusammenhang mit Figur 1 erläutert, befindet sich hinter den Sonnenkollektorsträngen 6a, 6b ein End-Einspritzkühler 71, welcher den von den einzelnen Sonnenkollektorsträngen 6a, 6b gelieferten überhitzten und gemischten Dampf auf die von der Dampfturbine 11 im Kraftwerkblock 10 benötigte Frischdampftemperatur einstellt. Der auf diese Weise vom Überhitzer-Solarfeld 3A gelieferte Frischdampf wird dann genau wie der von den anderen Überhitzer-Solarfeldern 3B, 3C, 3D gelieferte Dampf dem Powerblock 10 zugeführt.

Die Einstellung der Frischdampftemperatur mittels des Einspritzkühlers 71 erfolgt durch Abgleich eines Blocktemperatur-Soll-Werts BTS, welcher z. B. von einer Powerblockführung oder einer anderen Komponente des Leittechnik-Systems vorgegeben wird. Dieser dient in einer Endtemperaturregelung 70 als Führungsgröße. Als Regelgröße, d. h. als Ist-Wert, wird an einer Temperatur-Messstelle T3 hinter dem Einspritzkühler 71 die Temperatur TM des gemischten und mittels des Einspritzkühlers 71 auf den gewünschten Wert abgekühlten Dampfs gemessen und einem Vergleicher 74 zugeführt, welcher aus der Regelgröße und der Führungsgröße eine Regelabweichung ermittelt und diese einem Regler 73, beispielsweise einem PI-Regler, zuführt. Dieser Regler 73 steuert unmittelbar oder mittelbar ein Ventil 72 an, durch das bestimmt wird, wieviel Kühlwasser über den Einspritzkühler 71 in den überhitzten Dampf eingespritzt wird. So wird in einem schnellen Regelkreis die Endtemperatur TM des gemischten Dampfes möglichst gut an den vorgegebenen Blocktemperatur-Soll-Wert BTS angepasst. Über ein Einstellmodul 75 wird außerdem auf den Blocktemperatur-Soll-Wert BTS eine Temperaturabweichung TAW aufsummiert, um so eine Soll-Mischtemperatur TSM vorzugeben, die der überhitzte Dampf am Ausgang der Überhitzer-Sonnenkollektorstränge 6a, 6b in der Mischzone 8 vor dem ausgangsseitigen Einspritzkühler 71 aufweisen soll. Diese Erhöhung der Soll-Temperatur für die einzelnen Überhitzer-Sonnenkollektorstränge 6a, 6b ist deswegen sinnvoll, da so durch den Einspritzkühler 71 und die zugehörige Endtemperaturregelung 70 eine Regelung in beide Richtungen möglich ist, d. h. sowohl nach unten als auch nach oben. Das heißt, es wird über die Vorgabe eines höheren Soll-Werts der Dynamikbereich der Endtemperaturreglung 70 so justiert, dass bei einer mittleren Einstellung des Einspritzkühlers 71 die von der Turbine geforderte Frischdampftemperatur im Regelfall erreicht wird.

Die Soll-Mischtemperatur TSM wird dann zunächst der Temperaturkoordinierungseinrichtung 22 zugeführt. Diese Temperaturkoordinierungseinrichtung 22 weist hier für jeden Sonnenkollektorstrang 6a, 6b einen eigenen Umschalter 62a, 62b auf, welcher in einer ersten Schaltstellung den Soll-Mischtemperaturwert TSM durchschaltet, d. h. unverändert als Soll-Temperatur-Wert TSa, TSb an die einzelnen Regelungsanordnungen 21a, 21b weiterleitet oder, sofern dies nötig ist, durch einen durch die Temperaturkoordinierungseinrichtung 22 vorgegebenen Soll-Temperatur-Wert TSa, TSb ersetzt.

Kernpunkt dieser Temperaturkoordinierungseinrichtung 22 ist hier eine Soll-Wert-Ermittlungseinrichtung 61, welche beispielsweise in Form geeigneter Software auf einem Mikrokontroller oder auf mehreren untereinander vernetzten Mikrokontrollern realisiert werden kann. Diese Soll-Wert-Ermittlungseinrichtung 61 weist eine Anzahl von Eingangsschnittstellen auf, über die der Soll-Wert-Ermittlungseinrichtung 61 jeweils die in den einzelnen Überhitzer-Kollektorsträngen 6a, 6b des Dampfüberhitzer-Solarfeldes 3A vorliegenden aktuellen Endtemperaturen TEa, TEb, ..., TEn sowie die zugehörigen Dampfmassenströme ma, mb, ..., mn übermittelt werden. Mit Hilfe dieser Werte kann die Soll-Wert-Ermittlungseinrichtung 61 zunächst prüfen, ob in irgendeinem der Kollektorstränge 6a, 6b die Endtemperatur TEa, TEb, ..., TEn zu stark von der vorgegebenen Soll-Temperatur TSa, TSb bzw. von der gewünschten Soll-Mischtemperatur TSM abweicht, so dass zu befürchten ist, dass die Soll-Mischtemperatur TSM insgesamt nicht mehr erreicht wird. Der Grund hierfür kann beispielsweise darin liegen, dass einer oder mehrere der Sonnenkollektorstränge des Überhitzer-Solarfeldes abgeschattet sind, dejustiert sind oder sonstige Fehler vorliegen.

In diesem Fall wird die Soll-Temperatur TSa, TSb der gut funktionierenden Kollektorstränge angehoben, um die nicht so gut funktionierenden Kollektorstränge zu stützen. Hierzu berechnet die Soll-Wert-Ermittlungseinheit geeignete Soll-Werte für die gut funktionierenden Kollektorstränge und ersetzt die Soll-Temperatur TSM (durch Umschalten der Schalter 62a, 62b über die Steuereingänge 63a, 63b) durch den zuvor berechneten erhöhten Soll-Temperaturwert.

Eine Berechnung eines geeigneten Soll-Werts für die die volle Leistung erbringenden Kollektorstränge wird nachfolgend beschrieben. Hierzu wird zunächst der Gesamtmassenstrom mg des Dampfes berechnet, der aus allen n Kollektorsträngen des betreffenden Überhitzer-Solarfeldes 3A zur Verfügung gestellt wird:

$$mg = \sum_{i=1}^{n} mi \qquad (1)$$

Damit lässt sich die aktuell vorliegende Mischtemperatur TM in der Mischzone 8 und vor dem Einspritzkühler 71 aus den jeweiligen Massenströmen mi und Endtemperaturen TEi in den einzelnen Sonnenkollektorsträngen i = 1 - n wie folgt berechnen:

$$TM = \frac{\sum_{i=1}^{n} \left(mi \cdot TEi\right)}{mg} \qquad (2)$$

Bezeichnet man all die Kollektorstränge, welche nicht die gewünschte Soll-Temperatur erreichen können, mit dem Index j, so ergibt sich eine zur Kompensation der Minderleistung geeignete Soll-Temperatur TSf für die voll leistungsfähigen Kollektorstränge gemäß der Gleichung

$$TSf = \frac{TSM \cdot mg - \sum_{j} mjTEj}{\sum_{i \neq j} mi} \qquad (3)$$

Dabei läuft die Summe im Zähler jeweils über alle nicht ausreichend funktionierenden Kollektorstränge und die Summe im Nenner über alle voll leistungsfähigen Kollektorstränge. TSM ist hierbei wieder die vorgegebene Soll-Mischtemperatur, die der Mischdampf vor dem Einspritzkühler 71 erreichen soll. Das heißt, es wird über eine Mischungsrechnung anhand der gemessenen Dampftemperaturen und den Dampfmasseströmen ein Soll-Wert für alle die Kollektorstränge ermittelt, die ausreichend gute Heizleistung bringen, mit dem Ziel, die Endüberhitzer-Austrittstemperatur dort so weit anzuheben, dass an der Mischstelle die nicht ausreichend funktionierenden Kollektorstränge gestützt werden. Dabei wird allerdings von der Soll-Wert-Ermittlungseinrichtung darauf geachtet, dass der ausgegebene Soll-Wert unterhalb einer maximal erlaubten Arbeitstemperatur der betroffenen Bauteile, d. h. der Überhitzer-Sonnenkollektoren, der Dampfleitungen, der Sammler etc., begrenzt ist, um diese nicht zu schädigen.

Im Folgenden werden die Gleichungen noch einmal passend für den in den Figuren 2 und 3 einfachsten Fall zweier Kollektorstränge 6a, 6b erläutert, wobei davon ausgegangen wird, dass der linke Kollektorstrang 6b abgeschattet ist und daher nicht mehr die ausreichende Leistung erreicht, wogegen der rechte Kollektorstrang 6a eine ausreichende Heizleistung liefert. In diesem Fall ergibt sich die Gesamtdampfmenge gemäß

$$mg = ma + mb \qquad (1a)$$

Die Mischtemperatur erhält man analog zu Gleichung (2), nun als

$$TM = \frac{ma \cdot TEa + mb \cdot TEb}{mg} \qquad (2a)$$

Ebenso lässt sich analog Gleichung (3) die Soll-Temperatur TSa für den ersten Sonnenkollektorstrang 6a ermitteln, welcher nötig ist, um die Minderleistung des zweiten Sonnenkollektorstrangs 6b genau zu kompensieren.

$$TSa = \frac{TSM \cdot mg - mb \cdot TEb}{ma} \qquad (3b)$$

Die einzelnen Regelungsanordnungen 21a, 21b, 21a', 21b' der Kollektorstränge 6a, 6b können dann jeweils die vorgegebene Soll-Temperatur TSa, TSb nutzen und völlig autark von den anderen Kollektorsträngen die Endüberhitzer-Austrittstemperatur TEa, TEb soweit wie möglich auf die gewünschte Soll-Temperatur TSa, TSb regeln. Dies wird nachfolgend anhand der in den Figuren 2 und 3 gezeigten Ausführungsbeispiele nur für einen der beiden Kollektorstränge 6a, 6b, nämlich den rechten Kollektorstrang 6a, erläutert. Es ist klar, dass die Regelungsanordnungen der weiteren Kollektorstränge in gleicher Weise aufgebaut sind und funktionieren.

Bei dem Ausführungsbeispiel gemäß Figur 2 wird in den einzelnen Regelungsanordnungen 21a, 21b jeweils ein kaskadenförmiger Aufbau zweier Regler 24, 25 genutzt.

Ein erster Regler 24, bei dem es sich vorzugsweise um einen PI-Regler oder einen PID-Regler handelt, befindet sich hier in einem schnellen Regelungskreis, der die an einer Messstelle T2 ermittelte Zwischentemperatur TZa hinter dem ersten Einspritzkühler 23a als Regelgröße nutzt und in einem Vergleicher 29 mit einer Führungsgröße vergleicht, welche von einem zweiten Regler 25, welcher langsamer ist und übergeordnet in der Kaskade regelt, zur Verfügung gestellt wird. Die im Vergleicher 29 gebildete Regelabweichung wird dann in dem schnellen Regler 24 verwendet, um einen Steuerwert SW für ein Regelventil 60a auszugeben, das wiederum die Kühlwirkung des Einspritzkühlers 23a vorgibt. Dieser schnelle Regler 24 ist also ein Folgeregler, welcher auf die von dem Führungsregler 25 vorgegebene Führungsgröße FG reagiert.

Bei dem Führungsregler 25 handelt es sich beispielsweise ebenfalls um einen PI-Regler oder einen PID-Regler. Seinen Eingangswert erhält er im Wesentlichen durch einen Vergleich des Soll-Werts TSa mit dem Endtemperaturwert TEa, welcher an der Temperatur-Messstelle T1 gemessen wurde. Die daraus ermittelte Regelabweichung wird aber nicht direkt auf den Führungsregler 25 gegeben, sondern es wird zunächst in einem Minimalwert-Begrenzer 27 dafür gesorgt, dass der Wert nicht unterhalb eines Sattdampftemperatur-Grenzwerts DDS liegt, welcher von einer Sattdampftemperatur-Ermittlungseinrichtung 26 vorgegeben wird. Diese ermittelt den Sattdampftemperatur-Grenzwert DDS auf Basis der aktuellen Zwischentemperatur TZa und auf Basis des aktuellen Drucks p, welcher an der Druck-Messstelle PM ermittelt wird. Durch diese Sattdampf-Minimalbegrenzung ist dafür gesorgt, dass die Soll-Temperatur immer über der Sattdampf-Temperatur liegt und es nicht innerhalb des Kollektorstrangs 6a zu einer Kondensation kommen kann. Als weiteren Eingangswert erhält der Führungsregler 25 eine Nachstellzeit tn, die in einer Nachstellzeit-Ermittlungseinrichtung 28, welche das Überhitzer-Zeitverhalten abbildet, auf Basis des ermittelten Massestroms ma berechnet wird. Dieses Überhitzer-Zeitverhalten spiegelt im Wesentlichen das Zeitverhalten des der Zwischeneinspritzung 23a nachgeschalteten Endüberhitzers 7e wider. Der aktuelle Massestrom ma wird deswegen benötigt, da dieser Massenstrom u. a. die Transportgeschwindigkeit und somit das Zeitverhalten des Endüberhitzers 7e maßgeblich mitbestimmt. Ist beispielsweise wenig Dampf vorhanden, so wirken sich Aktionen am Eingang des Endüberhitzers 7e später am Ausgang aus, als wenn viel Dampf vorhanden ist. Das heißt, die Verzugs- und Ausgleichzeiten verlängern sich bei kleinen Masseströmen, so dass die Nachstellzeiten tn entsprechend angepasst werden müssen.

Die vom Führungsregler 25 für den Folgeregler 24 ausgegebene Führungsgröße FG, die am Vergleicher 29 mit der Zwischentemperatur TZa verglichen wird, wird zunächst noch einmal in einem Subtrahierer 33 mit Hilfe einer Einstrahlungswert-Korrektureinrichtung 30 modifiziert. Diese Einstrahlungswert-Korrektureinrichtung 30 verwendet die Einstrahlungswerte EW, die - wie oben bereits beschrieben - von einer Einstrahlungsmittlungseinheit 32 am Endüberhitzer 7e ermittelt werden. Die aktuellen Einstrahlwerte EW werden zunächst einem Differenzierer 31 zugeführt, welcher beispielsweise auf Basis der ersten Ableitung der Funktion der Einstrahlwerte EW über der Zeit einen Einstrahlungs-Korrekturwert EK generiert, mit dem die Führungsgröße FG korrigiert werden kann, wenn sich kurzfristig die Einstrahlung über dem Endüberhitzer 7e verändert hat. Wird z.B. mit einer einfachen photovoltaischen Solarzelle als Einstrahlwert EW ein Stromsignal gemessen, das proportional zur Einstrahlung ist, so kann dieses einem üblichen Differenzierer zugeführt werden, der seinerseits ein zur zeitlichen Stromänderung proportionales Ausgangssignal ausgibt, welches dann selbst als Einstrahlungs-Korrekturwert EK verwendet werden kann oder welches, z.B. durch Bildung eines Differenzwerts zu einem Schwellenwert oder sonstigen Modifikation, zur Ermittlung eines Einstrahlungs-Korrekturwerts herangezogen werden kann. D. h. es werden nur die Veränderungen in der gemessenen Einstrahlung, d.h. im Einstrahlwert EW, über der Zeit registriert, so dass in erster Linie schnelle Veränderungen zu einer entsprechenden Korrektur führen. Auf diese Weise wird sichergestellt, dass insbesondere durch Wolken erfolgte Abschattung des Endüberhitzers 7e, welche relativ schlagartig auftreten und verschwinden können, sofort in die Regelung eingehen und nicht erst das langsame Zeitverhalten des Endüberhitzers 7e abgewartet werden muss. Dadurch kann die Regelgüte signifikant verbessert werden.

Da der Korrekturwert EK erst hinter dem Minimalbegrenzer 27, d. h. hinter dem Führungsregler 25, eingreift, wird bei dieser Korrektur vorzugsweise auch der Sattdampftemperatur-Grenzwert DDS berücksichtigt, was beispielsweise durch geeignete Programmierung des Differenzierers 31 erfolgen kann, indem z.B. die Obergrenze des Differenzierers entsprechend eingestellt wird. Dadurch wird dafür gesorgt, dass der Korrekturwert EK den Führungswert FG nicht derart verändert, dass es doch zu einer Temperatur unterhalb der Sattdampftemperatur kommt.

Bei dem Ausführungsbeispiel gemäß Figur 3 sind die einzelnen Regelungsanordnungen 21a', 21b' konzeptionell anders aufgebaut als bei dem Ausführungsbeispiel gemäß Figur 2.

Auch hier werden aber sowohl die Zwischentemperaturen TZa als auch die Endtemperaturen TEa bei der Regelung in einem schnellen und in einem langsamen Regelungskreis berücksichtigt. Bei dieser Variante ist es so, dass wiederum aus der Endtemperatur TEa als Ist-Wert und dem vorgegebenen Soll-Wert TSa in einem Vergleicher 46 zunächst eine Regelabweichung RA ermittelt wird, die im Prinzip von einem Regler 40 genutzt wird, der direkt durch Ausgabe eines Steuerwerts SW das Ventil 60a für den Einspritzkühler 23a steuert.

In einer Einstrahlwert-Korrektureinrichtung 30 erfolgt jedoch zunächst wieder eine Korrektur der Regelabweichung RA hinsichtlich der Veränderung von im Endüberhitzer 7e mittels der Einstrahlungsermittlungseinheit 32 ermittelten Einstrahlwerten EW in analoger Weise, wie dies im Zusammenhang mit dem Aufbau gemäß Figur 2 schon erläutert wurde. D. h. auch hier werden mittels eines Differenzierers 31 die Veränderungen der Einstrahlwerte EW zum Erhalt eines Einstrahlungs-Korrekturwerts EK analysiert, der hier jedoch in einem Summierer 34 mit der Regelabweichung RA kombiniert wird.

Allerdings ist es hier nicht notwendig, einen Sattdampftemperatur-Grenzwert bereits im Differenzierer 31 zu berücksichtigen, da ein Sattdampftemperatur-Grenzwert erst später im Regelungskreislauf unmittelbar vor dem schnellen Regler 40 begrenzend einwirkt, nämlich in einem Maximalwert-Begrenzer 41, dem ein geeigneter Sattdampftemperatur-Grenzwert DDS' von einer Sattdampftemperatur-Ermittlungseinrichtung 42 vorgegeben wird. Die Sattdampftemperatur-Ermittlungseinrichtung 42 ermittelt den Sattdampftemperatur-Grenzwert DDS' wiederum auf Basis des an der Druck-Messstelle PM ermittelten Drucks p sowie der an der Temperatur-Messstelle T2 hinter dem Einspritzkühler 23a ermittelten Zwischentemperatur TZa.

Da aufgrund des Zeitverhaltens des Endüberhitzers 7e eine solche direkte Aufgabe der Regelabweichung RA auf den Regler 40 zu einer sehr langsamen und instabilen Regelung führen würde, wird hier die Zwischentemperatur TZa, die an der Messstelle T2 hinter dem Einspritzkühler 23a ermittelt wird, genutzt, um mit einem $PT_n$-Glied (Zeitverzögerung höherer Ordnung) 43 sowie einem Vergleicher 44 die Zeitverzögerung n-ter Ordnung (beispielsweise dritter Ordnung) des Endüberhitzers 7e zu berücksichtigen und die Regelabweichung RA damit zu korrigieren. Das $PT_n$-Glied 43 erhält zum einen eine Zeitkonstante t, die von einer Zeitkonstanten-Ermittlungseinheit 47 auf Basis des an der Massenstrom-Messstelle MM ermittelten Massenstroms ma ermittelt wurde, und zum anderen die an der Messstelle T2 gemessene Zwischentemperatur TZa. Der Ausgangswert des $PT_n$-Glieds 43 wird dann am Vergleicher 44 mit der aktuellen Zwischentemperatur TZa verglichen. Diese Schaltung aus $PT_n$-Glied 43 und Vergleicher 44 bildet hier eine Art Modell des Endüberhitzers 7e bzw. dessen Zeitverhaltens. Hinter dem Vergleicher 44, liegt also ein (auf Basis des Massestroms ma und der aktuellen Zwischentemperatur TZa bzw. deren Änderung ermittelter) Abweichungswert AW vor, wie er durch die unmittelbar zuvor durchgeführte Ansteuerung des Einspritzkühlers 23a eigentlich an der Endtemperatur TEa zu erwarten wäre, wenn die entsprechende Verzögerungszeit verstrichen ist. Durch diesen kurzzeitigen "Blick in die Zukunft" kann also die Regelabweichung RA schnell angepasst werden, indem der Abweichungswert AW hinter dem Vergleicher 44 mittels eines Summierers 45 als Korrekturwert auf die (zuvor mit dem Einstrahlungs-Korrekturwerts EK bereits korrigierte) Regelabweichung RA aufaddiert wird. Das heißt, es wird dem eigentlichen langsamen Regelkreis zusätzlich ein zweiter, schneller Regelkreis zur Regelabweichung aufgeschaltet, um das dynamische Verhalten der gesamten Temperaturregelung zu verbessern, wobei die Dampftemperatur TZa hinter der Zwischeneinspritzung benutzt wird, um die Reaktion durch die Zwischeneinspritzung sofort zu erfassen, noch bevor es überhaupt zu einer Änderung der Endtemperatur TEa hinter dem Endüberhitzer 7e kommt. Der Einfluss der Regelungsänderung wird dann unter Berücksichtigung des Zeitverhaltens des Endüberhitzers 7e wieder zurückgenommen, um so die Regelung zu stabilisieren.

Trotz der Zeitverzögerung zwischen der eigentlichen Regelstelle, d. h. dem Einspritzkühler 23a, und der Ist-Wert-Messung der Endtemperatur TEa an der Messstelle T1 kann also durch den PI-Regler 40 insgesamt eine sehr schnelle Regelung erfolgen.

Es wird abschließend noch einmal darauf hingewiesen, dass es sich bei dem vorhergehend detailliert beschriebenen Verfahren und dem Steuerungssystem lediglich um bevorzugte Ausführungsbeispiele handelt, welche vom Fachmann in verschiedenster Weise modifiziert werden können, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

**Patentansprüche**

1. Verfahren zum Betrieb eines solarthermischen Kraftwerks (1), welches eine Dampfturbine (11) und zumindest eine Sonnenkollektor-Dampfüberhitzereinheit (6a, 6b, 6c) aufweist, die die Dampfturbine (11) im Betrieb mit überhitztem Dampf speist, wobei die Temperatur des erzeugten überhitzten Dampfes unter Messung einer aktuellen Ist-Temperatur (TEa, TEb) des Dampfes auf eine Soll-Temperatur (TSa, TSb) geregelt wird,
**dadurch gekennzeichnet,**
**dass** auf Basis einer Veränderung einer aktuellen Sonneneinstrahlung auf die Sonnenkollektor-Dampfüberhitzereinheit (6a, 6b, 6c) ein Einstrahlungs-Korrekturwert (EK) ermittelt wird, welcher als ein Parameter für die Temperaturregelung des überhitzten Dampfs in der Sonnenkollektor-Dampfüberhitzereinheit (6a, 6b, 6c) genutzt wird.

2. Verfahren nach Anspruch 1, **dadurch gekennzeichnet, dass** in einer Sonnenkollektor-Dampfüberhitzereinheit (6a, 6b, 6c) zur Temperaturregelung eine Dampfkühleinrichtung (23a, 23b) angesteuert wird, die zwischen zwei hintereinandergeschalteten Teileinheiten (7v, 7e) der Sonnenkollektor-Dampfüberhitzereinheit (6a, 6b, 6c) angeordnet ist.

3. Verfahren nach Anspruch 2, **dadurch gekennzeichnet,**
**dass** die Temperaturregelung des Dampfs in einer Sonnenkollektor-Dampfüberhitzereinheit auf Basis einer aktuellen Endüberhitzer-Austrittstemperatur (TEa, TEb), die am Ausgang der Sonnenkollektor-Dampfüberhitzereinheit (6a, 6b, 6c) ermittelt wird, und auf Basis einer aktuellen Zwischentemperatur (TZa, TZb) erfolgt, die in einem Abstand hinter der Dampfkühleinrichtung (23a, 23b) ermittelt wird.

4. Verfahren nach Anspruch 3, **dadurch gekennzeichnet,**
**dass** auf Basis der aktuellen Endüberhitzer-Austrittstemperatur als Ist-Temperatur (TEa, TEb) und eines vorgegeben Temperatur-Soll-Werts (TSa, TSb) eine Regeldifferenz oder Regelabweichung (RA) ermittelt wird, auf deren Basis ein Steuerwert (SW) für die Dampfkühleinrichtung (23a, 23b) ermittelt wird, und dass auf Basis der aktuellen Zwischentemperatur (TZa, TZb) zuvor eine Korrektur der Regeldifferenz oder Regelabweichung (RA) hinsichtlich einer Zeitverzögerung einer Regelungswirkung erfolgt.

5. Verfahren nach Anspruch 3, **dadurch gekennzeichnet,**
**dass** auf Basis der aktuellen Zwischentemperatur (TZa, TZb) als eine Regelgröße in einem ersten, schnellen Regelungskreis ein Steuerwert (SW) für die Dampfkühleinrichtung (23a, 23b) ermittelt wird und auf Basis der aktuellen Endüberhitzer-Austrittstemperatur (TEa, TEb) als eine Regelgröße innerhalb eines dem ersten Regelungskreis kaskadenartig übergeordneten zweiten, langsameren Regelungskreises eine Führungsgröße (FG) für den ersten Regelungskreis ermittelt wird.

6. Verfahren nach einem der Ansprüche 2 bis 5, **dadurch gekennzeichnet, dass** bei der Regelung ein vorgegebener Grenzwert (DDS, DDS') so berücksichtigt wird, dass die Temperatur des Dampfes hinter der Dampfkühleinrichtung (23a, 23b) oberhalb einer Sattdampftemperatur liegt.

7. Verfahren nach einem der Ansprüche 1 bis 6, **dadurch gekennzeichnet, dass** das solarthermische Kraftwerk mehrere Sonnenkollektor-Dampfüberhitzereinheiten (6a, 6b, 6c) aufweist, wobei der aus den Sonnenkollektor-Dampfüberhitzereinheiten (6a, 6b, 6c) kommende überhitzte Dampf vor dem Turbineneingang (9) gemischt wird, und wobei für die einzelnen Sonnenkollektor-Dampfüberhitzereinheiten (6a, 6b, 6c) jeweils die Temperatur des erzeugten überhitzten Dampfes unter Messung einer aktuellen Ist-Temperatur (TEa, TEb) auf eine Soll-Temperatur (TSa, TSb) geregelt wird, um eine vorgegebene Soll-Mischtemperatur (TSM) des gemischten Dampfes zu erreichen, wobei zumindest für eine erste Sonnenkollektor-Dampfüberhitzereinheit (6a, 6b, 6c) eine Soll-Temperaturregelung unter Berücksichtigung der aktuellen Ist-Temperatur (TEa, TEb) zumindest einer zweiten Sonnenkollektor-Dampfüberhitzereinheit (6a, 6b, 6c) durchgeführt wird.

8. Verfahren nach Anspruch 7, **dadurch gekennzeichnet,**
**dass** die aktuelle Soll-Temperaturregelung der ersten Sonnenkollektor-Dampfüberhitzereinheit (6a, 6b, 6c) unter Berücksichtigung der Dampfmassenströme (ma, mb) in der ersten und in der zweiten Sonnenkollektor-Dampfüberhitzereinheit (6a, 6b, 6c) durchgeführt wird.

9. Verfahren nach einem der Ansprüche 1 bis 8, **dadurch gekennzeichnet, dass** die Soll-Mischtemperatur (TSa, TSb) so gewählt wird, dass sie oberhalb einer vorgegebenen Turbinen-Frischdampftemperatur liegt, und der Dampf hinter oder in einer Mischzone (8), in der der aus den Sonnenkollektor-Dampfüberhitzereinheiten (6a, 6b, 6c) kommende überhitzte Dampf gemischt wird, auf die Turbinen-Frischdampftemperatur abgekühlt wird.

10. Steuerungssystem (20, 20') für ein solarthermisches Kraftwerk (1) mit zumindest einer Dampfturbine (11) und einer Sonnenkollektor-Dampfüberhitzereinheit (6a, 6b, 6c), wobei das Steuerungssystem (20) folgende Komponenten aufweist:

- zumindest eine erste Temperatur-Messstelle (T1) zur Ermittlung von aktuellen Ist-Temperaturwerten (TEa, TEb) des von der Sonnenkollektor-Dampfüberhitzereinheit (6a, 6b, 6c) erzeugten überhitzten Dampfes,
- zumindest eine der Sonnenkollektor-Dampfüberhitzereinheit (6a, 6b, 6c) zugeordnete Einstrahlungsermittlungseinheit (23) zur Ermittlung von Einstrahlwerten (EW) für die Sonnenkollektor-Dampfüberhitzereinheit (6a, 6b, 6c), welche jeweils eine aktuellen Sonneneinstrahlung auf die betreffende Sonnenkollektor-Dampfüberhitzereinheit (6a, 6b, 6c) repräsentieren,
- eine Regelungsanordnung (21a, 21b, 21a', 21b'), welche ausgebildet ist, um für die Sonnenkollektor-Dampfüberhitzereinheit (6a, 6b, 6c) die Temperatur des überhitzten Dampfes unter Nutzung des gemessenen aktuellen Ist-Temperaturwerts (TEa, TEb) auf eine vorgegebene Soll-Temperatur (TSa, TSb) zu regeln, wobei auf Basis einer Veränderung der aktuellen Sonneneinstrahlung ein Einstrahlungs-Korrekturwert (EK) ermittelt wird, welcher als ein Parameter für die Temperaturregelung des überhitzten Dampfs in der Sonnenkollektor-Dampfüberhitzereinheit (6a, 6b, 6c) genutzt wird.

11. Steuerungssystem nach Anspruch 10, **dadurch gekennzeichnet, dass** das Steuerungssystem (20, 20') eine oder mehrere der folgenden Komponenten aufweist:

- eine Anzahl von den einzelnen Sonnenkollektor-Dampfüberhitzereinheiten (6a, 6b, 6c) zugeordneten Zwischentemperatur-Messstellen (T2) zur Ermittlung von aktuellen Zwischentemperaturen (TZa, TZb) des Dampfs innerhalb der Sonnenkollektor-Dampfüberhitzereinheiten (6a, 6b, 6c)
- eine Anzahl von den einzelnen Sonnenkollektor-Dampfüberhitzereinheiten (6a, 6b, 6c) zugeordneten Massenstrom-Messstellen (MM) zur Ermittlung von Dampfmassenströmen (ma, mb) in den Sonnenkollektor-Dampfüberhitzereinheiten (6a, 6b, 6c),
- eine Anzahl von Druck-Messstellen (PM) zur Ermittlung eines Drucks (P) in den Sonnenkollektor-Dampfüberhitzereinheiten (6a, 6b, 6c).

12. Solarthermisches Kraftwerk (1) mit mindestens folgenden Komponenten:

- einer Dampfturbine (11),
- einer Anzahl von Sonnenkollektor-Dampferzeugereinheiten (2A, 2B, 2C, 2D) zur Erzeugung von Dampf,
- einer Anzahl von Sonnenkollektor-Dampfüberhitzereinheiten (6a, 6b, 6c), um zumindest einen Teil des erzeugten Dampfs zu überhitzen und die Turbine (11) im Betrieb mit dem überhitztem Dampf zu speisen,
- ein Steuerungssystem (20, 20') nach Anspruch 10 oder 11.

13. Solarthermisches Kraftwerk nach Anspruch 12, **gekennzeichnet durch** eine Mehrzahl von Sonnenkollektor-Dampfüberhitzereinheiten (6a, 6b, 6c), welche ausgangsseitig so verbunden sind, dass der aus den Sonnenkollektor-Dampfüberhitzereinheiten (6a, 6b, 6c) kommende überhitzte Dampf vor dem Turbineneingang (9) gemischt wird.

14. Solarthermisches Kraftwerk nach Anspruch 12 oder 13, **gekennzeichnet durch** zwischen zwei hintereinander geschaltete Teileinheiten (7) der Sonnenkollektor-Dampfüberhitzereinheiten (6a, 6b, 6c) angeordnete Dampfkühleinrichtungen (23a, 23b), welche mit dem Steuerungssystem (20, 20') gekoppelt sind.

15. Solarthermisches Kraftwerk nach einem der Ansprüche 12 bis 14, **gekennzeichnet durch** eine hinter oder in einer Mischzone (8), in welcher der aus den Sonnenkollektor-Dampfüberhitzereinheiten (6a, 6b, 6c) kommende überhitzte Dampf gemischt wird, angeordnete Dampfkühleinrichtung (71).

FIG 1

FIG 2

EP 2 317 140 A1

FIG 3

EP 2 317 140 A1

Europäisches
Patentamt

European
Patent Office

Office européen
des brevets

**EUROPÄISCHER RECHERCHENBERICHT**

Nummer der Anmeldung

EP 09 01 3544

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MARKUS ECK; TOBIAS HIRSCH: "Dynamics and control of parabolic trough collector loops with direct steam generation" SOLAR ENERGY, Bd. 81, 2007, Seiten 268-279, XP002577284 * Abbildungen 13,15 * * Absätze [0005], [0006] * ----- | 1-15 | INV. F03G6/00 F03G6/06 |
| A | US 2008/289334 A1 (OROSZ MATT [US] ET AL) 27. November 2008 (2008-11-27) * das ganze Dokument * ----- | 1-15 | |
| A | US 2008/092551 A1 (SKOWRONSKI MARK JOSEPH [US]) 24. April 2008 (2008-04-24) * das ganze Dokument * ----- | 1-15 | |
| A | DE 103 29 623 B3 (DEUTSCH ZENTR LUFT & RAUMFAHRT [DE]) 13. Januar 2005 (2005-01-13) * Zusammenfassung; Abbildungen 1,3 * * Absätze [0030], [0058] - [0060], [0094] * ----- | 1-15 | |
| A | US 2005/279095 A1 (GOLDMAN ARNOLD J [IL]) 22. Dezember 2005 (2005-12-22) * das ganze Dokument * ----- | 1-15 | RECHERCHIERTE SACHGEBIETE (IPC) F03G |

Der vorliegende Recherchenbericht wurde für alle Patentansprüche erstellt

| Recherchenort | Abschlußdatum der Recherche | Prüfer |
|---|---|---|
| München | 13. April 2010 | Giorgini, Gabriele |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 01 3544

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-04-2010

| Im Recherchenbericht angeführtes Patentdokument | Datum der Veröffentlichung | Mitglied(er) der Patentfamilie | Datum der Veröffentlichung |
|---|---|---|---|
| US 2008289334 A1 | 27-11-2008 | KEINE | |
| US 2008092551 A1 | 24-04-2008 | KEINE | |
| DE 10329623 B3 | 13-01-2005 | KEINE | |
| US 2005279095 A1 | 22-12-2005 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **von Markus Eck ; Tobias Hirsch.** Dynamics and control of parabolic trough collector loops with direct steam generation. *Solar Energy,* 2007, vol. 81, 268-279